(19) 

Europäisches
Patentamt
European
Patent Office
Office européen
des brevets

(11) **EP 4 697 400 A1**

(12) **EUROPEAN PATENT APPLICATION**

(43) Date of publication:
**18.02.2026 Bulletin 2026/08**

(21) Application number: **25195033.3**

(22) Date of filing: **11.08.2025**

(51) International Patent Classification (IPC):
*H01M 4/131* (2010.01)   *H01M 4/134* (2010.01)
*H01M 4/36* (2006.01)   *H01M 10/0562* (2010.01)
*H01M 4/62* (2006.01)

(52) Cooperative Patent Classification (CPC):
**H01M 4/366; H01M 4/131; H01M 4/134;
H01M 4/62; H01M 10/0562**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.08.2024 KR 20240108467**

(71) Applicant: **SAMSUNG SDI CO., LTD.
Yongin-si, Gyeonggi-do 17084 (KR)**

(72) Inventors:
• **LEE, Won Gi
Yongin-si, Gyeonggi-do 17084 (KR)**
• **CHOI, Jinkyu
Yongin-si, Gyeonggi-do 17084 (KR)**

(74) Representative: **Michalski Hüttermann & Partner
Patentanwälte mbB
Kaistraße 16A
40221 Düsseldorf (DE)**

(54) **POSITIVE ELECTRODE FOR ALL-SOLID-STATE BATTERY, ALL-SOLID-STATE BATTERY INCLUDING THE SAME, AND METHOD OF MANUFACTURING THE SAME**

(57)    Disclosed are positive electrodes, all-solid-state batteries including the positive electrodes, and methods of manufacturing the all-solid-state batteries. The positive electrode includes a positive electrode current collector, a first positive electrode active material layer on the positive electrode current collector, and a second positive electrode active material layer on the first positive electrode active material layer. The first positive electrode active material layer includes a first positive electrode active material and a first solid electrolyte. The second positive electrode active material layer includes a second positive electrode active material and a second solid electrolyte. An average particle diameter of the first positive electrode active material is greater than the average particle diameter of the second positive electrode active material. An average particle diameter of the first solid electrolyte is lower than the average particle diameter of the second solid electrolyte.

FIG. 2

EP 4 697 400 A1

**Description**

CROSS-REFERENCE TO RELATED APPLICATION

This application claims priority under 35 U.S.C § 119 to Korean Patent Application No. 10-2024-0108467 filed on August 13, 2024 in the Korean Intellectual Property Office, the disclosure of which is hereby incorporated by reference in its entirety.

BACKGROUND

Examples of present disclosure relate to a positive electrode for an all-solid-state battery, an all-solid-state battery including the positive electrode, and a method of manufacturing the all-solid-state battery, and more particularly to, a multi-layered film that transfers an all-solid-state battery cell.

Development of high-energy density and safe batteries is driven by industrial demands. For example, lithium ion batteries are commercialized not only in formation-related and communication devices, but also in, e.g., the automotive industry. In the automotive industry, safety is emphasized due to the direct relation thereof to human safety.

An all-solid-state battery uses a solid electrolyte in place of a liquid electrolyte. As all-solid-state batteries do not use flammable organic dispersion mediums, the possibility of fire or explosion may be significantly reduced even in the event of short-circuits.

SUMMARY

Some example embodiments of the present disclosure include a positive electrode layer for an all-solid-state battery with desired or improved electrochemical characteristics, and a method of manufacturing the all-solid-state battery.

According to some example embodiments of the present disclosure, a positive electrode layer for an all-solid-state battery may include a positive electrode current collector, a first positive electrode active material layer on the positive electrode current collector, and a second positive electrode active material layer on the first positive electrode active material layer. The first positive electrode active material layer may include a first positive electrode active material and a first solid electrolyte. The second positive electrode active material layer may include a second positive electrode active material and a second solid electrolyte. An average particle diameter of the first positive electrode active material may be greater than an average particle diameter of the second positive electrode active material. An average particle diameter of the first solid electrolyte may be lower than an average particle diameter of the second solid electrolyte.

According to some example embodiments of the present disclosure, an all-solid-state battery may include the positive electrode layer discussed above; a negative electrode layer opposite to the positive electrode layer; and a solid electrolyte layer between the positive electrode layer and the negative electrode layer.

According to some example embodiments of the present disclosure, a method of manufacturing a positive electrode layer for an all-solid-state battery may include coating on a positive electrode current collector a first positive electrode slurry to form a first positive electrode active material layer, and providing the first positive electrode active material layer with a self-standing film to form a second positive electrode active material layer. The first positive electrode slurry may include a first positive electrode active material and a first solid electrolyte. The self-standing film may include a second positive electrode active material and a second solid electrolyte. An average particle diameter of the first positive electrode active material may be greater than an average particle diameter of the second positive electrode active material. An average particle diameter of the first solid electrolyte may be lower than an average particle diameter of the second solid electrolyte.

BRIEF DESCRIPTION OF DRAWINGS

FIG. 1 illustrates a cross-sectional view showing an all-solid-state battery, according to some example embodiments of the present disclosure.
FIG. 2 illustrates an enlarged view showing section M of FIG. 1.
FIG. 3 illustrates a cross-sectional view showing a positive electrode layer included in an all-solid-state battery, according to some example embodiments of the present disclosure.
FIGS. 4 to 7 illustrate cross-sectional views showing a method of fabricating an all-solid-state battery, according to some example embodiments of the present disclosure.
FIG. 8 illustrates a cross-sectional view showing a positive electrode layer included in an all-solid-state battery, according to some example embodiments of the present disclosure.

FIGS. 9 to 12 illustrate diagrams showing a method of fabricating an all-solid-state battery, according to some example embodiments of the present disclosure.

FIG. 13 is a flow chart illustrating a method of manufacturing a positive electrode layer for an all-solid-state battery, according to some example embodiments of the present disclosure.

DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this disclosure, it is understood that, when an element is referred to as being "on" another element, the element can be "directly on" the other element, or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this disclosure do not exclude the presence or addition of one or more other components.

In this disclosure, the term "combination thereof" may refer to a mixture, a stack, a composite, a copolymer, an alloy, a blend, or a reaction product.

In this disclosure, the term "metal" may include metals or metalloids, such as silicon and germanium, in an elemental or ionic state.

In this disclosure, the term "alloy" may refer to a mixture of two or more metals.

In this disclosure, the term "positive electrode active material" may refer to a positive electrode material configured to undergo lithiation and delithiation.

In this disclosure, the term "negative electrode active material" may refer to a negative electrode material configured to undergo lithiation and delithiation.

In this disclosure, the terms "lithiation" and "to lithiate" may refer to a process of adding lithium to a positive electrode active material or a negative electrode active material.

In this disclosure, the terms "delithiation" and "to delithiate" may refer to a process of removing lithium from a positive electrode active material or a negative electrode active material.

In this disclosure, the terms "discharge" and "to discharge" may refer to process of providing electrochemical energy to a battery.

In this disclosure, the terms "discharge" and "to discharge" may refer to a process of removing electrochemical energy from a battery.

In this disclosure, the term "positive electrode" may refer to an electrode in which electrochemical reduction and lithiation occur during a discharge process.

In this disclosure, the term "negative electrode" may refer to an electrode in which electrochemical oxidation and delithiation occur during a discharge process.

Unless otherwise especially defined in this disclosure, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter ($D_{50}$) value may be obtained through a calculation. A laser scattering method may also be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

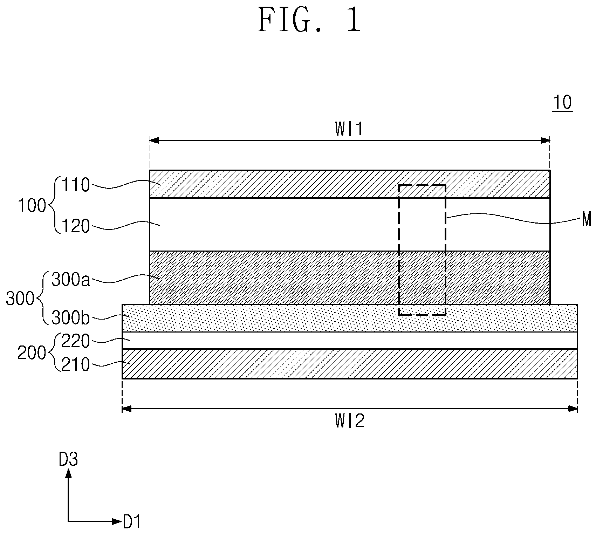

FIG. 1 illustrates a cross-sectional view showing an all-solid-state battery, according to some example embodiments of the present disclosure. Referring to FIG. 1, a mono-cell 10 of an all-solid-state battery according to an example embodiment of the present disclosure is illustrated. The mono-cell 10 may include a positive electrode layer 100, a negative electrode layer 200 opposite to the positive electrode layer 100, and a solid electrolyte layer 300 between the positive electrode layer 100 and the negative electrode layer 200. The present disclosure, however, is not limited thereto, and the mono-cell 10 may further include an additional functional layer, such as, e.g., an adhesion enhancement layer (not shown), between the positive electrode layer 100 and the solid electrolyte layer 300 or between the negative electrode layer 200 and the solid electrolyte layer 300. The mono-cell 10 may be or include a cell stack.

The positive electrode layer 100 may include a positive electrode current collector 110, and a positive electrode active material layer 120 on the positive electrode current collector 110. The positive electrode active material layer 120 may include a positive electrode active material, a solid electrolyte, a conductive material, and a binder.

The positive electrode current collector 110 may provide a reference surface on which the positive electrode active material layer 120 is disposed. The positive electrode current collector 110 may have a plate or foil shape. For example, the positive electrode current collector 110 may include at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In an example embodiment of the present disclosure, the positive electrode current collector 110 may be omitted. When the positive electrode current collector 110 is included as illustrated in FIG. 1, although not shown, to increase adhesion between the positive electrode current collector 110 and the positive electrode active material layer 120, a carbon layer having a thickness in a range of $\geq 0.1\ \mu m$ to $\leq 4\ \mu m$ may further be disposed between the positive electrode current collector 110 and the positive electrode active material layer 120.

The positive electrode active material may include a material that can reversibly absorb and desorb lithium ions. For example, the positive electrode active material may include at least one of a lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be included alone or in a mixture of two or more substances.

The lithium transition metal oxide may be or include, for example, a compound represented by one or more of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0<\alpha<2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_{1-b-c}Mn_bB_cD_\alpha$ (where $0.90 \leq a \leq 1$, $0 \leq b \leq 0.5$, $0 \leq c \leq 0.05$, and $0< \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged so as to be displaced from each other by 1/2 of a ridge of a unit lattice. The lithium transition metal oxide having the layered rock salt type structure may be or include a ternary lithium transition metal oxide, such as, e.g., $LiNi_xCo_yAl_zO_2$ (NCA) or $LiNi_xCo_yMn_zO_2$ (NCM) (where $0<x<1$, $0<y<1$, $0<z<1$, and $x+y+z=1$). When the positive electrode active material includes a ternary lithium transition metal oxide having the layered rock salt type structure, the mono-cell 10 may have increased energy density and improved thermal stability.

The compound included in the positive electrode active material may be covered with a coating layer (not shown). The positive electrode active material may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O-ZrO_2$ (LZO). A method of forming the coating layer may be any one of methods that do not adversely affect physical characteristics of the positive electrode active material. The method of forming the coating layer may include, for example, spray coating or immersion.

When the positive electrode active material includes nickel (Ni) as a ternary lithium transition metal oxide such as NCA or NCM, a capacity density of the mono-cell 10 may increase to reduce metal elution from the positive electrode active material in a charged state. Therefore, the mono-cell 10 may improve in cycle characteristics in a charged state. The language "cycle characteristics" may refer to properties that indicate the degree to which the mono-cell 10 is degraded due to charge and discharge. For example, the mono-cell 10 with high cycle characteristics may degrade less due to charge and discharge, while the mono-cell 10 with low cycle characteristics may degrade more due to charge and discharge.

The positive electrode active material may have, for example, a substantially spherical or substantially oval particle shape. There is no limitation on a particle diameter and an amount of the positive electrode active material.

The solid electrolyte may include a sulfide-based solid electrolyte with desired or improved lithium ion conductivity. The sulfide-based solid electrolyte may include, for example, at least one of $Li_2S$-$P_2S_5$, $Li_2S$-$P_2S_5$-LiX (where X is or includes a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the sulfide-based solid electrolyte may be or include an argyrodite-type compound including $Li_{7-a}M_aPS_{6-c}X_c$ (where $0 \leq a \leq 2$ and $0 \leq c \leq 2$). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of $\geq 1.5$ g/cc to $\leq 2.0$ g/cc. As the argyrodite-type solid electrolyte has a density that is equal to or greater than $\geq 1.5$ g/cc, it may be possible to decrease an internal resistance of the all-solid-state battery and to reduce or prevent a solid electrolyte film from experiencing a short-circuit and penetration caused by the formation of lithium dendrite. The solid electrolyte may have an elastic modulus in a range of, for example, $\geq 15$ GPa to $\leq 35$ GPa.

The solid electrolyte included in the positive electrode active material layer 120 may have a medium-sized average particle diameter ($D_{50}$) less than the average particle diameter of a solid electrolyte included in the solid electrolyte layer 300. For example, the medium-sized average particle diameter ($D_{50}$) of the solid electrolyte in the positive electrode active material layer 120 may be about equal to or less than about 90%, equal to or less than about 80%, equal to or less than about 70%, equal to or less than about 60%, equal to or less than about 50%, equal to or less than about 40%, equal to or less than about 30%, or equal to or less than about 20% of the medium-sized average particle diameter ($D_{50}$) of a solid electrolyte included in the solid electrolyte layer 300. A medium-sized average particle diameter ($D_{50}$) may be a median diameter measured by a laser particle size distribution analyzer.

The positive electrode active material layer 120 may include a conductive material. The conductive material may exhibit conductivity without causing chemical change in the mono-cell 10 to increase the conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may include a material that adheres to each other the positive electrode active material, the solid electrolyte, and the conductive material included in the positive electrode active material layer 120 and that improves adhesion between the positive electrode active material layer 120 and the positive electrode current collector 110. The binder may include, for example, at least one of polyvinylidenefluoride, styrene-butadiene rubber (SBR), polytetrafluoroethylene, vinylidenefluoride/hexafluoropropylene copolymer, polyacrylonitrile, or polymethyl methacrylate.

In the positive electrode active material layer 120, the positive electrode active material may be included in an amount of $\geq 85$ parts by weight to $\leq 92$ parts by weight relative to 100 parts by weight of a sum of the positive electrode active material, the solid electrolyte, the conductive material, and the binder. The binder may be included in an amount in a range of $\geq 0.5$ parts by weight to $\leq 1.5$ parts by weight in the positive electrode active material layer 120.

In the positive electrode active material layer 120, the conductive material may be present in an amount in a range of ≥ 1 part by weight to ≤ 50 parts by weight relative to 100 parts by weight of the solid electrolyte. When the conductive material is present in an amount that is less than about 1 part by weight relative to 100 parts by weight of the solid electrolyte, the positive electrode active material layer 120 may decrease in electrical conductivity. When the conductive material is present in an amount that is greater than about 50 parts by weight relative to 100 parts by weight of the solid electrolyte, a proportion of the conductive material may be excessively increased to the point of causing incomplete formation of a coating layer that covers a surface of the solid electrolyte.

According to some example embodiments, the positive electrode active material layer 120 may further include at least one additive such as or including at least one of a filler, a coating agent, a dispersant, and an ionic conductivity agent, in addition to the positive electrode active material, the solid electrolyte, the conductive material, and the binder.

The solid electrolyte layer 300 may be located between the positive electrode layer 100 and the negative electrode layer 200, and may include a sulfide-based solid electrolyte with desired or improved lithium ion conductivity. The solid electrolyte included in the solid electrolyte layer 300 may include a material that is the same as, or different from, the materials included in the solid electrolyte of the positive electrode active material layer 120.

In an example embodiment, the solid electrolyte layer 300 may include a sulfide-based solid electrolyte. The sulfide-based solid electrolyte may be prepared by, for example, melting and quenching, or mechanically milling a starting raw material such as $Li_2S$ or $P_2S_55$. In addition, the resultant may be thermally treated after the treatment mentioned above. The solid electrolyte may be in an amorphous state, a crystalline state, or a mixed state of amorphous and crystalline states. The solid electrolyte may include at least one of sulfur (S), phosphorus (P), and lithium (Li) among component elements included in the sulfide-based solid electrolyte mentioned above. For example, the solid electrolyte may be a material including $Li_2S$-$P_2S_5$. When a material including $Li_2S$-$P_2S_5$ is included as a sulfide-based solid electrolyte material of the solid electrolyte, a mixing molar ratio of $Li_2S$ and $P_2S_5$ may be in a range of about 50:50 to about 90:10 (or $Li_2S$:$P_2S_5$ = 50:50 ~ 90: 10).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the sulfide-based solid electrolyte may be or include an argyrodite-type compound including $Li_{7-a}M_aPS_{6-c}X_c$ (where $0 \leq a \leq 2$ and $0 \leq c \leq 2$). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of the all-solid-state battery, and to reduce or prevent a solid electrolyte film from short-circuit and penetration caused by the formation of lithium dendrite. The solid electrolyte may have an elastic modulus in a range of, for example, ≥ 15 GPa to ≤ 35 GPa.

The solid electrolyte layer 300 may further include a binder. The binder included in the solid electrolyte layer 300 may include, for example, at least one of styrene-butadiene rubber (SBR), polytetrafluoroethylene, polyvinylidenefluoride, polyethylene, but the present disclosure is not limited thereto. The binder of the solid electrolyte layer 300 may be the same as, or similar to, the binder of the positive electrode active material layer 120, or the binder of a negative electrode coating layer 220 which is discussed below.

The negative electrode layer 200 may include a negative electrode current collector 210, and a negative electrode coating layer 220 on the negative electrode current collector 210. The negative electrode current collector 210 may provide a reference surface on which the negative electrode coating layer 220 is disposed. The negative electrode current collector 210 may include a material that does not react with lithium, for example, a material that does not form an alloy or a compound with lithium. For example, the negative electrode current collector 210 may include at least one metal such as or including copper (Cu), stainless steel, titanium (Ti), iron (Fe), cobalt (Co), and nickel (Ni). A thickness of the negative electrode current collector 210 may range from ≥ 1 μm to ≤ 20 μm, from ≥ 5 μm to ≤ 15 μm, or from ≥ 7 μm to ≤ 10 μm.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may be omitted.

The negative electrode coating layer 220 may induce growth of lithium metal between the negative electrode coating layer 220 and the negative electrode current collector 210 when the mono-cell 10 is charged. The negative electrode coating layer 220 may be configured as a protection layer for lithium metal and simultaneously or contemporaneously may reduce or suppress precipitation and growth of lithium dendrite.

The negative electrode coating layer 220 may include metal and carbon. For example, the negative electrode coating layer 220 may include at least one metal such as or including at least one of gold (Au), platinum (Pt), palladium (Pd), silicon (Si), silver (Ag), aluminum (Al), bismuth (Bi), tin (Sn), and zinc (Zn). The negative electrode coating layer 220 may include at least one carbon such as or including at least one of carbon black, acetylene black, furnace black, Ketjen black, and graphene. In an example embodiment, the negative electrode coating layer 220 may include a mixture of carbon black and silver (Ag).

The negative electrode coating layer 220 may further include an additive in addition to metal and carbon. The negative electrode coating layer 220 may include at least one additive including at least one of, for example, a binder, a filler, a coating agent, a dispersant, and an ionic conductivity agent.

The negative electrode coating layer 220 may have a thickness that is lower than the thickness of the positive electrode active material layer 120. For example, the negative electrode coating layer 220 may have a thickness that is equal to or less than about 50%, equal to or less than about 40%, equal to or less than about 30%, equal to or less than about 20%, equal to or less than about 10%, or equal to or less than about 5% of the thickness of the positive electrode active material layer 120. The negative electrode coating layer 220 may have a thickness in a range of, for example, $\geq 1\ \mu m$ to $\leq 20\ \mu m$, $\geq 2\ \mu m$ to $\leq 10\ \mu m$, or $\geq 3\ \mu m$ to $\leq 7\ \mu m$. When the negative electrode coating layer 220 has an excessively or substantially small thickness, lithium dendrite formed between the negative electrode coating layer 220 and the negative electrode current collector 210 may collapse the negative electrode coating layer 220 to reduce cycle characteristics of the mono-cell 10. When the negative electrode coating layer 220 has an excessively or substantially large thickness, the mono-cell 10 may have a decreased energy density and an increased internal resistance caused by the negative electrode coating layer 220, thereby reducing cycle characteristics of the mono-cell 10.

Although not shown, a carbon layer may further be included to increase adhesion between the negative electrode coating layer 220 and the solid electrolyte layer 300.

According to some example embodiments of the present disclosure, the positive electrode layer 100 may have a width that is lower than the width of the negative electrode layer 200. For example, the positive electrode layer 100 may have a first width WI1 in a first direction D1, and the negative electrode layer 200 may have a second width WI2 in the first direction D1. The first width WI1 may be lower than the second width WI2. As the first width WI1 is lower than the second width WI2, the positive electrode layer 100 may further be provided on a circumference thereof with a gasket (not shown) to compensate the width difference.

According to some example embodiments of the present disclosure, the solid electrolyte layer 300 may include a positive electrode solid electrolyte layer 300a and a negative electrode solid electrolyte layer 300b. The positive electrode solid electrolyte layer 300a and the negative electrode solid electrolyte layer 300b may be stacked together to constitute one solid electrolyte layer 300. The positive electrode solid electrolyte layer 300a may be in contact with the positive electrode active material layer 120, and the negative electrode solid electrolyte layer 300b may be in contact with the negative electrode coating layer 220.

For example, the positive electrode solid electrolyte layer 300a and the negative electrode solid electrolyte layer 300b may include solid electrolytes that have the same composition. Alternatively, the positive electrode solid electrolyte layer 300a and the negative electrode solid electrolyte layer 300b may include solid electrolytes having different compositions from each other.

The positive electrode solid electrolyte layer 300a may have the first width WI1, and the negative electrode solid electrolyte layer 300b may have the second width WI2. For example, the positive electrode solid electrolyte layer 300a may have a width that is lower than the width of the negative electrode solid electrolyte layer 300b. The first width WI1 of the positive electrode solid electrolyte layer 300a may be lower than the second width WI2 of the negative electrode solid electrolyte layer 300b. As the first width WI1 of the positive electrode solid electrolyte layer 300a is lower than the second width WI2 of the negative electrode solid electrolyte layer 300b, the positive electrode solid electrolyte layer 300a may further be provided on a circumference thereof with a gasket (not shown) to compensate the width difference.

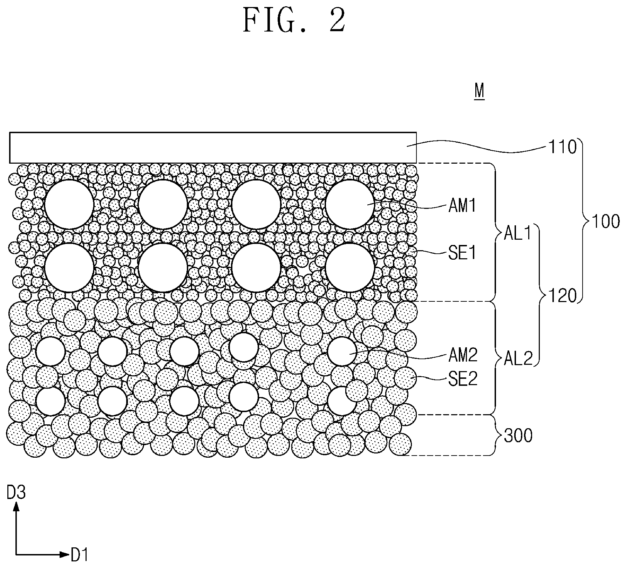

FIG. 2 illustrates an enlarged view showing section M of FIG. 1. Referring to FIG. 2, the positive electrode active material layer 120 may be located on the positive electrode current collector 110. The positive electrode active material layer 120 may include a first positive electrode active material layer AL1 on the positive electrode current collector 110, and a second positive electrode active material layer AL2 on the first positive electrode active material layer AL1.

The positive electrode active material layer 120 may include a positive electrode active material and a solid electrolyte, and may further include a binder and/or a conductive material. The positive electrode active material, the binder, the conductive material, and the solid electrolyte included in the positive electrode active material layer 120 may be the same as the positive electrode active material, the binder, the conductive material, and the solid electrolyte discussed above with reference to FIG. 1.

The first positive electrode active material layer AL1 may include a first positive electrode active material AM1 and a first solid electrolyte SE1. The second positive electrode active material layer AL2 may include a second positive electrode active material AM2 and a second solid electrolyte SE2.

The first positive electrode active material AM1 may have an average particle diameter ($D_{50}$) that is greater than the average particle diameter of the second positive electrode active material AM2. The average particle diameter of the first positive electrode active material AM1 may be in a range of $\geq 1.67$ times to $\leq 10$ times the average particle diameter of the second positive electrode active material AM2. The average particle diameter of the first positive electrode active material AM1 may be greater than the average particle diameter of the first solid electrolyte SE1 and/or the average particle diameter of the second solid electrolyte SE2. The average particle diameter of the first positive electrode active material AM1 may be in a range of $\geq 4$ times to $\leq 13$ times the average particle diameter of the first solid electrolyte SE1. The average particle diameter of the first positive electrode active material AM1 may range, for example, from $\geq 10 \, \mu m$ to $\leq 20 \, \mu m$.

The average particle diameter of the first solid electrolyte SE1 may be lower than the average particle diameter of the second solid electrolyte SE2. The average particle diameter of the first solid electrolyte SE1 may be lower than the average particle diameter of the second positive electrode active material AM2. The average particle diameter of the first solid electrolyte SE1 may range, for example, from $\geq 0.1 \, \mu m$ to $\leq 1.5 \, \mu m$.

The average particle diameter of the second positive electrode active material AM2 may range, for example, from $\geq 2 \, \mu m$ to $\leq 6 \, \mu m$. The average particle diameter of the second solid electrolyte SE2 may range, for example, from $\geq 1.5 \, \mu m$ to $\leq 2.5 \, \mu m$.

The positive electrode active material layer 120 according to the present disclosure may include a plurality of positive electrode active material layers AL1 and AL2. For example, the first positive electrode active material layer AL1 adjacent to the positive electrode current collector 110 may include the first positive electrode active material AM1 having a large average particle diameter, and the second positive electrode active material layer AL2 spaced apart (e.g., in a third direction D3) form the positive electrode current collector 110 may include the second positive electrode active material AM2 having a small average particle diameter.

For example, the positive electrode current collector 110 may be provided thereon with the first positive electrode active material layer AL1 having high electrical conductivity and increased capacity, and the first positive electrode active material layer AL1 may be provided thereon with the second positive electrode active material layer AL2 having high ionic conductivity and increased output. Therefore, the positive electrode active material layer 120 according to some example embodiments of the present disclosure may exhibit desired or improved electrochemical characteristics.

In addition, the first positive electrode active material layer AL1 may include the first solid electrolyte SE1 having a small average particle diameter. The second positive electrode active material layer AL2 may include the second solid electrolyte SE2 having a large average particle diameter. Thus, the first positive electrode active material layer AL1 and the second positive electrode active material layer AL2 may have a high density and increased contact area between particles therein, and a positive electrode may have a desired or improved conductivity.

Moreover, the second positive electrode active material layer AL2 may be manufactured in the form of a self-standing film, as discussed below. The second positive electrode active material layer AL2 may be manufactured in the form of a self-standing film and provided on the first positive electrode active material layer AL1, thereby proving an all-solid-state battery including a thick film having a high loading amount.

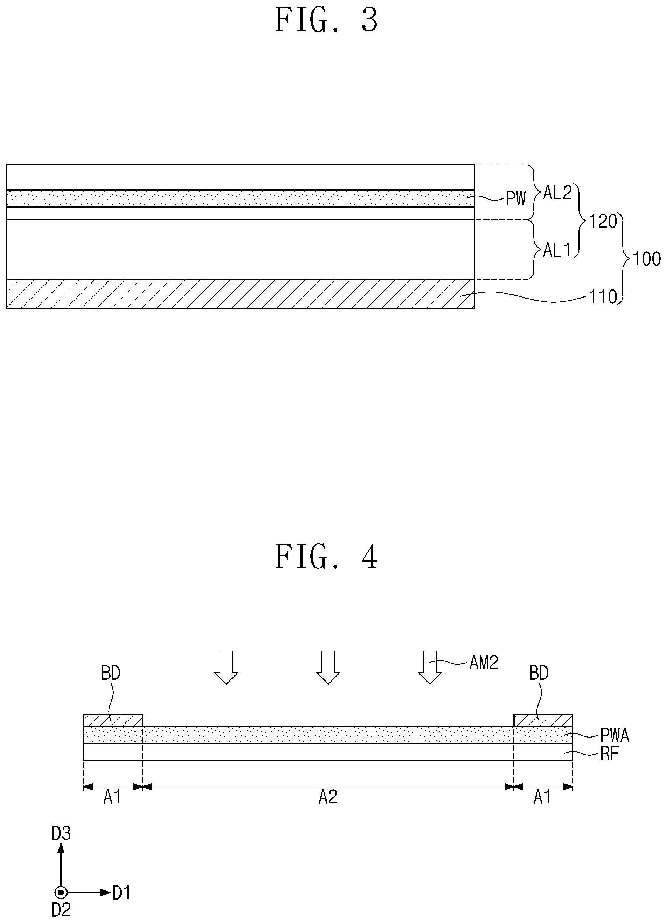

FIG. 3 illustrates a cross-sectional view showing a positive electrode layer included in an all-solid-state battery, according to some example embodiments of the present disclosure. A redundant explanation of the positive electrode layer discussed with reference to FIGS. 1 and 2 may not be repeated for brevity of description.

Referring to FIG. 3, the second positive electrode active material layer AL2 may include a porous film PW impregnated in the second positive electrode active material layer AL2.

The porous film PW may include a plurality of pores. For example, the porous film PW may have a porosity in a range of $\geq 50\%$ to $\leq 99\%$, $\geq 60\%$ to $\leq 95\%$, or $\geq 70\%$ to $\leq 90\%$. The pores of the porous film PW may each have a size of $\geq 50$ nm to $\leq 500$ nm or $\geq 100$ nm to $\leq 300$ nm. When the porosity and the pore size of the porous film PW fall within the ranges above, a positive electrode active material may easily infiltrate into the porous film PW, and the porous film PW may contain an active material which amount is sufficient enough to act as a positive electrode self-standing film.

The porous film PW may have a small thickness. The thickness of the porous film PW may range from $\geq 5 \, \mu m$ to $\leq 20 \, \mu m$, from $\geq 5 \, \mu m$ to $\leq 15 \, \mu m$, or from $\geq 8 \, \mu m$ to $\leq 10 \, \mu m$. When the thickness of the porous film PW falls within the ranges above, a loading level of a positive electrode may be improved without interrupting movement of lithium ions in the positive electrode.

The porous film PW may have a weight in a range of $\geq 2 \, g/m^2$ to $\leq 4 \, g/m^2$. For example, the weight of the porous film PW may range from $\geq 2.5 \, g/m^2$ to $\leq 3.5 \, g/m^2$.

The porous film PW may have a tensile strength in a range of $\geq 0.1 \, N/mm$ to $\leq 0.2 \, N/mm$. For example, the tensile strength of the porous film PW may range from $\geq 0.1 \, N/mm$ to $\leq 0.13 \, N/mm$.

A permeability per thickness of the porous film PW may range from $\geq 0.1 \, sec/100 \, ml$ to $\leq 1 \, sec/100 \, ml$. For example, the permeability per thickness the porous film PW may range from $\geq 0.1 \, sec/100 \, ml$ to $\leq 0.5 \, sec/100 \, ml$.

The porous film PW may include at least one of polyester, polyolefin, polyacetal, polyamide, polycarbonate, polyimide, polyether ether ketone, polyether sulfone, polyphenylene oxide, and polyphenylene sulfide. For example, the polyester may include at least one of polyethylene terephthalate, polybutylene terephthalate, polyethylene naphthalate, and the like. In an example embodiment, the porous film PW may be or include a porous nonwoven fabric.

According to some example embodiments of the present disclosure, the positive electrode layer 100 for an all-solid-state battery may include the porous film PW disposed in the positive electrode active material layer 120, and the positive electrode active material layer 120 may include a plurality of positive electrode active material layers AL1 and AL2 on upper and lower sides of the porous film PW, thereby achieving a high loading level. In this disclosure, the term "loading level" may refer to an amount of an active material per unit area of an electrode, and may be a factor designed by considering a diffusion coefficient of lithium ions, conduction between particles, and a path to a current collector.

In an all-solid-state battery according to an example embodiment, the positive electrode active material layer 120 positioned on one side of the positive electrode current collector 110 may have a loading level that is equal to or greater than about 35 mg/cm$^2$, for example, equal to or greater than about 40 mg/cm$^2$ or equal to or greater than about 45 mg/cm$^2$.

According to some example embodiments, when the positive electrode active material layers 120 are coated on opposite sides of the positive electrode current collector 110, a total loading amount of the positive electrode active material layers 120 may be equal to or greater than about 70 mg/cm$^2$, for example, equal to or greater than about 80 mg/cm$^2$ or equal to or greater than about 90 mg/cm$^2$.

Other configurations may be substantially the same as the configurations of the positive electrode layer 100 discussed above with reference to FIGS. 1 and 2.

FIGS. 4 to 7 illustrate cross-sectional views showing a method of manufacturing a positive electrode layer, according to some example embodiments of the present disclosure. For brevity of description, some omission is made to avoid a redundant explanation of the positive electrode active material layer discussed above with reference to FIGS. 1 and 2.

Referring to FIGS. 4 to 7, a preliminary porous film PWA may be provided on a release film RF.

Referring to FIG. 4, the release film RF may be placed on a plane defined by a first direction D1 and a second direction D2. The second direction D2 may intersect the first direction D1. The preliminary porous film PWA may be provided on the release film RF. The preliminary porous film PWA may be stacked along a third direction D3 on the release film RF. The third direction D3 may intersect each of the first direction D1 and the second direction D2. As discussed above, the preliminary porous film PWA may include a plurality of pores. The pores of the preliminary porous film PWA may each have a size ranging from ≥ 50 nanometers to ≤ 500 nanometers. The preliminary porous film PWA may have a small thickness. The preliminary porous film PWA may have a thickness in a range of ≥ 5 μm to ≤ 20 μm. For example, the thickness of the preliminary porous film PWA may range from ≥ 5 μm to ≤ 15 μm or ≥ 8 μm to ≤ 12 μm. In an example embodiment, the preliminary porous film PWA may be or include a porous nonwoven fabric.

A binder BD may be laminated on the preliminary porous film PWA. The preliminary porous film PWA may include a first region A1 on which the binder BD is laminated, and a second region A2 on which the binder BD does not overlap along the D1 direction, and the first region A1 may be positioned on opposite sides of the preliminary porous film PWA. The second region A2 may be an area or region other than the first region A1.

The binder BD may be formed by being coated and then cured on the first region A1 of the preliminary porous film PWA. The binder BD may include at least one of a thermosetting resin and an ultraviolet curable resin.

After the formation of the binder BD, a second positive electrode active material AM2 may be provided on the preliminary porous film PWA. The second positive electrode active material AM2 may be provided on the second region A2 of the preliminary porous film PWA, and may be provided in the form of slurry, also referred to as the second positive electrode active material slurry.

The second positive electrode active material slurry may include a second positive electrode active material, a second solid electrolyte, a conductive material, and a binder. A description of the second positive electrode active material, the second solid electrolyte, the conductive material, and the binder included in the second positive electrode active material slurry may be the same as the description thereof discussed in FIG. 2. In an example embodiment, the second positive electrode active material slurry may include, as a binder, at least one of styrene-butadiene rubber, polytetrafluoroethylene, polyvinylidenefluoride, polyethylene, polyvinyl alcohol, vinylidenefluoride/hexafluoropropylene copolymer, polyacrylonitrile, and polymethyl methacrylate.

After the second positive electrode active material AM2 is coated on the preliminary porous film PWA, the second positive electrode active material AM2 may be cured.

The second positive electrode active material AM2 provided on the second region A2 of the preliminary porous film PWA may infiltrate into the preliminary porous film PWA. For example, when the second positive electrode active material AM2 is provided on the second region A2, the second positive electrode active material AM2 may infiltrate into the pores of the preliminary porous film PWA. The second positive electrode active material AM2 may infiltrate into the pores of the preliminary porous film PWA to form a porous film PW having pores that are filled with the second positive electrode active material AM2.

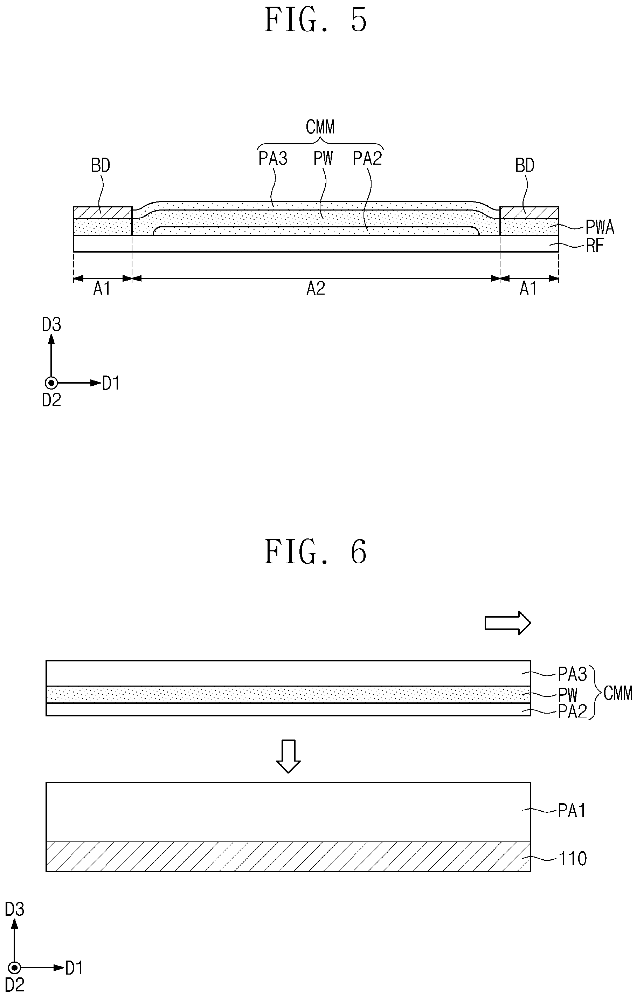

Referring to FIG. 5, after the second positive electrode active material AM2 is coated and infiltrates into the preliminary porous film PWA, at least a portion of the second region A2 of the porous film PW may be spaced apart from the release film RF. A portion of the second positive electrode active material AM2 may move through the pores of the porous film PW such that a second preliminary active material layer PA2 may be formed between the porous film PW and the release film RF. A portion of the second positive electrode active material AM2 may not pass through the porous film PW to form a third preliminary active material layer PA3 on the porous film PW.

The second preliminary active material layer PA2 that moves through the pores of the porous film PW may have a thickness that is less than the thickness of the third preliminary active material layer PA3 that does not pass through the porous film PW. In an example embodiment, a thickness ratio of the third preliminary active material layer PA3 to the second preliminary active material layer PA2 may range from $\geq 2$ to $\leq 10$, from $\geq 3$ to $\leq 10$, or from $\geq 4$ to $\leq 7$.

Although not shown in detail, the second positive electrode active material AM2 included in each of the second preliminary active material layer PA2 and the third preliminary active material layer PA3 may have a single unitary shape with an active material impregnated in the porous film PW. After the second positive electrode active material AM2 is coated and cured, a composite layer CMM may be formed which includes the second preliminary active material layer PA2, the third preliminary active material layer PA3, and the porous film PW interposed between the second and third preliminary active material layers PA2 and PA3.

The release film RF may be subsequently peeled off. For example, the release film RF may be separated from the composite layer CMM. Thus, the release film RF may include a material capable of being separated from the composite layer CMM. For example, the release film RF may include at least one of polyethylene terephthalate, polypropylene, polymethyl pentene, and any copolymer thereof.

The porous film PW included in the composite layer CMM may have a self-standing film shape. The self-standing film may refer to a thin layer or a film that maintains a certain or desired shape without being supported by another substrate. In an example embodiment, the composite layer CMM may have a shape constituted by components depicted in FIG. 5 from which are removed the release film RF, the binder BD, and the preliminary porous film PWA that corresponds to the first region A1.

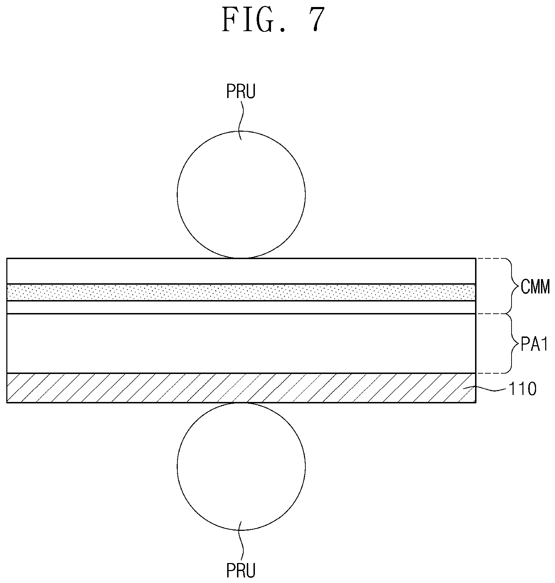

Referring to FIG. 6, a first preliminary active material layer PA1 may be formed on a positive electrode substrate 110. The first preliminary active material layer PA1 may be formed on only one side of the positive electrode substrate 110. A positive electrode active material may be coated and dried on one side of the positive electrode substrate 110, thereby forming the first preliminary active material layer PA1. The positive electrode substrate 110 depicted in FIG. 7 may correspond to the positive electrode current collector 110 discussed in FIGS. 1 and 2, and the first preliminary active material layer PA1 may correspond to the first positive electrode active material layer AL1 discussed in FIGS. 2 and 3.

A composite layer CMM may be provided on the first preliminary active material layer PA1. For example, a second preliminary active material layer PA2 may be provided to face the first preliminary active material layer PA1 formed on the positive electrode substrate 110. The second preliminary active material layer PA2 may be formed according to the description of FIGS. 5 and 6, and may be provided on the first preliminary active material layer PA1 disposed on one side of the positive electrode substrate 110.

Referring to FIG. 7, after the second preliminary active material layer PA2 is provided, the positive electrode substrate 110, the first preliminary active material layer PA1, and the composite layer CMM, which are stacked, e.g., sequentially stacked, may be integrally pressed together. A pressing unit PRU may press the positive electrode substrate 110, the first preliminary active material layer PA1, and the composite layer CMM that are stacked, e.g., sequentially stacked. The composite layer CMM may correspond to the second positive electrode active material layer AL2 discussed above with respect to FIGS. 2 and 3.

The pressing unit PRU may include a pressing roller. The pressing unit PRU may roll the positive electrode substrate 110, the first preliminary active material layer PA1 on the positive electrode substrate 110, and the composite layer CMM on the first preliminary active material layer PA1.

Referring back to FIG. 3, after the pressing process by the pressing unit PRU is performed, a positive electrode active material layer 120 may be formed.

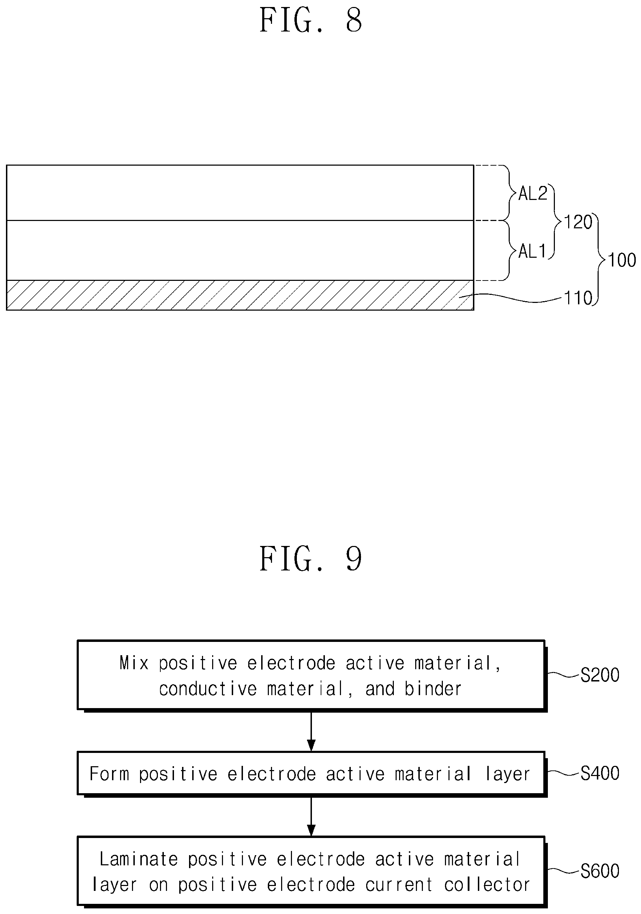

FIG. 8 illustrates a cross-sectional view showing a positive electrode layer included in an all-solid-state battery, according to some example embodiments of the present disclosure. For brevity of description, some omission is made to avoid a redundant explanation of the positive electrode layer discussed above with reference to FIGS. 1 and 2.

Referring to FIG. 8, the first positive electrode active material layer AL1 may include a binder for use in a wet process, and the second positive electrode active material layer AL2 may include a binder for use in a dry process. The wet process binder and the dry process binder may include different materials from each other.

The wet process binder may include, for example, at least one of polyvinylidenefluoride, styrene-butadiene rubber (SBR), polytetrafluoroethylene, vinylidenefluoride/hexafluoropropylene copolymer, polyacrylonitrile, and polymethyl methacrylate.

The dry process binder may include, for example, at least one of polytetrafluoroethylene (PTFE), polyvinylidene fluoride-hexafluoropropylene (PVDF-HFP) copolymers, polyvinylidenefluoride (PVDF), polyvinyl alcohol (PVA), polyacrylonitrile (PAN), carboxymethyl cellulose (CMC), starch, hydroxypropyl cellulose, cellulose, polyvinylpyrrolidone (PVP), polyethylene (PE), polypropylene (PP), ethylene-propylene-diene polymer (EPDM), sulfonated EPDM, styrene-butadiene rubber (SBR), fluororubber, and copolymers thereof, but the present disclosure is not limited thereto and any binder may be included as long as the binder is capable of manufacturing a dry electrode.

According to some example embodiments of the present disclosure, the positive electrode layer 100 for an all-solid-state battery may include a plurality of positive electrode active material layers AL1 and AL2, and thus a high loading level, may be achieved. In this disclosure, the term "loading level" may refer to an amount of an active material per unit area of an electrode, and may be a factor designed by considering a diffusion coefficient of lithium ions, conduction between particles, and a path to a current collector.

In a positive electrode for an all-solid-state battery according to an example embodiment, the positive electrode active material layer 120 located on one side of the positive electrode current collector 110 may have a loading level that is equal to or greater than about 35 mg/cm$^2$, for example, equal to or greater than about 40 mg/cm$^2$ or equal to or greater than about 45 mg/cm$^2$.

According to some example embodiments, when positive electrode active material layers 120 are coated on opposite sides of the positive electrode current collector 110, a total loading amount of the positive electrode active material layers 120 may be equal to or greater than about 70 mg/cm$^2$, for example, equal to or greater than about 80 mg/cm$^2$ or equal to or greater than about 90 mg/cm$^2$.

Other configurations may be substantially the same as the configurations discussed above with reference to FIGS. 1 and 2.

FIGS. 9 to 12 illustrate diagrams showing a method of manufacturing positive electrode layers, according to some example embodiments of the present disclosure. For brevity of description, some omission is made to avoid a redundant explanation of the positive electrode layer discussed with reference to FIGS. 1 and 2.

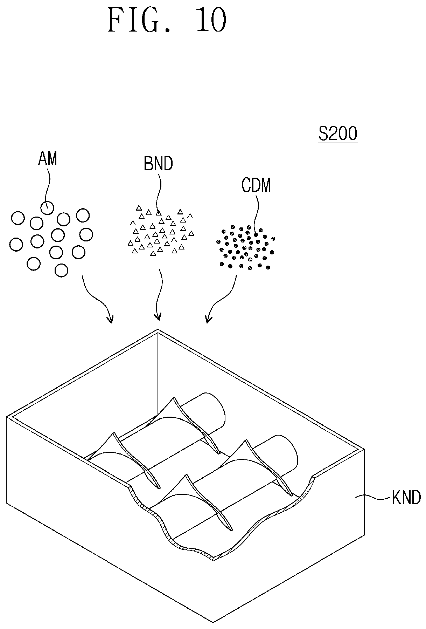

FIG. 9 illustrates a flow chart showing a method of manufacturing a dry electrode, according to some example embodiments of the present disclosure. FIGS. 10 to 12 illustrate perspective views showing the manufacturing method.

Referring to FIG. 9, a method of manufacturing a dry electrode may include mixing an electrode active material, a conductive material, and a binder (S200), allowing the mixture to be thin to form an electrode active material layer (S400), and laminating the electrode active material layer on an electrode current collector (S600).

Referring to FIG. 10, an electrode active material AM, a conductive material CDM, and a binder BND may be dry-mixed to form a dry mixture (S200). The dry mixing may refer to mixing without using a process solvent. The process solvent may be or include, for example, a solvent included in preparing an electrode slurry. The process solvent may be or include water or N-methyl pyrrolidone (NMP), but the present disclosure is not limited thereto, and any process solvent may be included as long as the process solvent is capable of being included in manufacturing the electrode slurry.

The conductive material CDM and the binder BND may respectively be or include a dry conductive material and a dry binder. The electrode active material AM may be or include a dry electrode active material. The electrode active material AM may be or include the second positive electrode active material AM2 discussed above with reference to FIGS. 1 and 2.

An agitator KND may be used to perform the dry mixing at a temperature in a range of, for example, ≥ 25°C to ≤ 65°C. For example, the agitator KND may be used to perform the dry mixing at a rotational speed ranging from ≥ 10 rpm to ≤ 10,000 rpm, or from ≥ 100 rpm to ≤ 10,000 rpm. The agitator KND may be used to perform the dry mixing for ≥ 1 minute to ≤ 200 minutes, or ≥ 1 minute to ≤ 150 minutes.

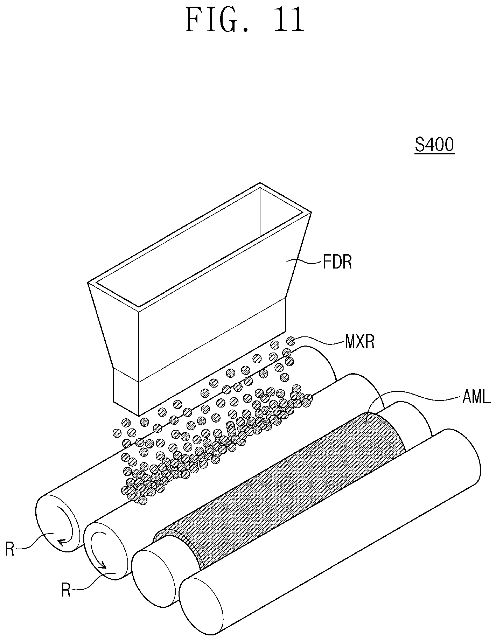

The agitator KND may be, for example, a kneader. The agitator KND may include, for example, a chamber, one or more rotary shafts disposed in the chamber, and a blade rotatably coupled to the rotary shaft and disposed in a longitudinal direction of the rotary shaft. The blade may be or include, for example, at least one of a ribbon blade, a sigma blade, a Z blade, a dispersing blade, and a screw blade. As the blade is included, the electrode active material AM, the dry conductive material CDM, and the dry binder BND may be effectively mixed with each other without any solvent. For example, a dough-like dry mixture (see MXR of FIG. 11) may be prepared.

A plasticizer or a pore former may be further added to the dry mixture MXR to form one or more pores in an electrode plate.

The kinds and amounts of the electrode active material AM, the conductive material CDM, and the binder BND included in the dry mixture MXR may be as discussed above.

Referring to FIG. 11, the dry mixture MXR may become thin to form an electrode active material layer AML (S400). The dry mixture MXR may be introduced from a feeder FDR into an extruding machine to be extruded into a sheet or film. For example, the extruding machine may include a pair of rollers R. The dry mixture MXR may be introduced into a gap between the pair of rollers R.

For example, this step may be performed at a temperature in a range of ≥ 25°C to ≤ 150°C under a pressure in a range of ≥ 3 kN to ≤ 80 kN. Thus, the electrode active material layer AML that is shaped like a film may be formed. The film-shaped electrode active material layer AML may have a self-standing film shape. The self-standing film may refer to a thin layer or a film that maintains a certain or desired shape without being supported by another substrate.

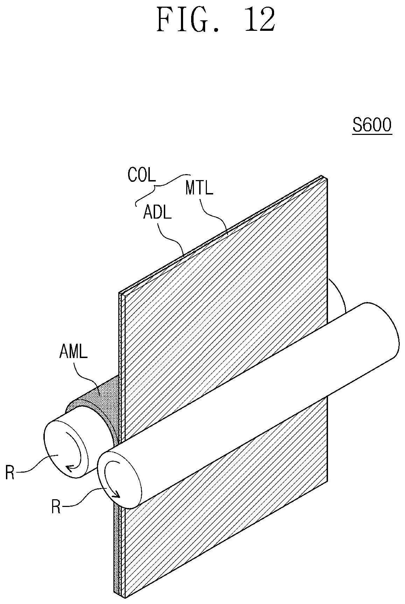

Referring to FIG. 12, the electrode active material layer AML may be laminated on an electrode current collector COL (S600). This step may include providing the electrode current collector COL. For example, the step of providing the electrode current collector COL may include providing a metal layer MTL, and placing a coating layer ADL on one side, or on opposite sides, of the metal layer MTL.

The metal layer MTL may correspond to the positive electrode current collector 110 discussed above with reference to FIGS. 1 and 2. The coating layer ADL may correspond to the first positive electrode active material layer AL1 discussed with reference to FIGS. 1 and 2. The coating layer ADL may be formed by coating and drying a positive electrode active material on one side of the metal layer MTL.

The electrode active material layer AML may be disposed on one side, or on opposite sides, of the electrode current collector COL, thereby manufacturing an electrode. For example, the electrode may be manufactured by laminating the electrode active material layer AML on the electrode current collector COL. The lamination may use a roll press or a plate press, but the present disclosure is not limited thereto.

The electrode active material layer AML may correspond to the second positive electrode active material layer AL2 discussed above with reference to FIGS. 1 and 2.

For example, the lamination may be performed at a temperature in a range of $\geq 50°C$ to $\leq 130°C$ under a pressure in a range of $\geq 3$ kN to $\leq 40$ kN. Thus, the electrode active material layer AML may be closely adhered to the electrode current collector COL.

Referring back to FIG. 8, the lamination process may be employed to form a positive electrode active material layer 120.

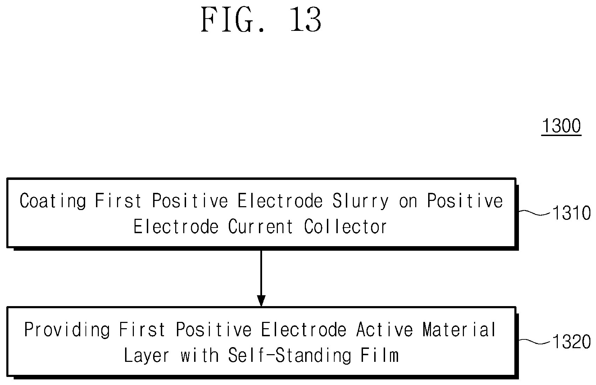

FIG. 13 is a flow chart illustrating a method of manufacturing a positive electrode layer for an all-solid-state battery, according to some example embodiments of the present disclosure. In FIG. 13, the method 1300 starts at operation 1310, which includes coating on a positive electrode current collector a first positive electrode slurry to form a first positive electrode active material layer. For example, the first positive electrode slurry includes a first positive electrode active material and a first solid electrolyte. In another example, the average particle diameter of the first positive electrode active material is in a range of $\geq 4$ times to $\leq 13$ times the average particle diameter of the first solid electrolyte. In another example, the average particle diameter of the first positive electrode active material is in a range of $\geq 1.67$ times to $\leq 10$ times the average particle diameter of the second positive electrode active material.

Operation 1320 includes providing the first positive electrode active material layer with a self-standing film to form a second positive electrode active material layer. For example, the self-standing film includes a second positive electrode active material and a second solid electrolyte. In another example, an average particle diameter of the first positive electrode active material is greater than an average particle diameter of the second positive electrode active material. In yet another example, an average particle diameter of the first solid electrolyte is less than an average particle diameter of the second solid electrolyte. In an example, providing the self-standing film includes coating a second positive electrode slurry on a porous film. In another example, the average particle diameter of the second solid electrolyte is in a range of $\geq 1.1$ times to $\leq 1.6$ times the average particle diameter of the first solid electrolyte.

Herein, the present disclosure is described in detail with reference to some example embodiments.

Embodiment

Manufacture of Positive Electrode:

A powder of $LiNi_{0.8}Co_{0.15}Mn_{0.05}O_2$ (NCM) of 15 $\mu$m in average particle diameter was prepared as a first positive electrode active material. A crystalline argyrodite-type solid electrolyte ($Li_6PS_5Cl$) of 1.5 $\mu$m in average particle diameter was prepared as a first solid electrolyte, polyvinylidenefluoride (PVDF) as a binder, and carbon nano-fiber (CNF) as a conductive material. The first positive electrode active material, the first solid electrolyte, the conductive material, and the binder were mixed in a weight ratio of 85 : 13.5 : 0.5 : 1 in an N-methyl pyrrolidone solvent to prepare a first positive electrode active material slurry. The first positive electrode active material slurry was coated and dried on an aluminum positive electrode current collector, and then pressed to manufacture a first positive electrode plate.

Separately, a second positive electrode active material slurry was prepared. A powder of $LiNi_{0.8}Co_{0.15}Mn_{0.05}O_2$ (NCM) of 4 $\mu$m in average particle diameter was prepared as a second positive electrode active material of the second positive electrode active material slurry. A crystalline argyrodite-type solid electrolyte ($Li_6PS_5Cl$) of 2 $\mu$m in average particle diameter was prepared as a second solid electrolyte, polyvinylidenefluoride (PVDF) as a binder, and carbon nano-fiber (CNF) as a conductive material. The second positive electrode active material, the second solid electrolyte, the conductive material, and the binder were mixed in a weight ratio of 85 : 13.5 : 0.5 : 1 in an N-methyl pyrrolidone solvent to prepare the second positive electrode active material slurry. An average particle diameter of the second positive electrode active material was 4 $\mu$m, and an average particle diameter of the second solid electrolyte was 2 $\mu$m.

The second positive electrode active material slurry was coated on a porous nonwoven fabric of 10 $\mu$m in thickness to prepare a positive electrode active material composite layer in the form of a self-standing film. The prepared positive electrode active material composite layer was stacked on the first positive electrode plate to allow the porous nonwoven fabric to reside close to the positive electrode current collector, and then the resultant was pressed to manufacture a positive electrode.

The pressing process was carried out at 25°C using a pressing roller where a linear pressure of the pressing roller was controlled to 2.3 tons, and a gap between upper and lower rollers was adjusted to zero to maximally press the positive electrode, with the result that a thickness of the pressed positive electrode was minimized to obtain a high mixture density. The positive electrode was manufactured to allow its positive electrode active material disposed on one side of the current collector to have a loading level of 45 mg/cm$^2$.

$Li_6PS_5Cl$ as an argyrodite-type solid electrolyte was added to an isobutylyl isobutylate binder solution added with an acrylate-based polymer to prepare a solid electrolyte slurry (the solid electrolyte and the binder were mixed in a weight ratio of 98.7 : 1.3). The prepared solid electrolyte slurry was coated on a release film of polytetrafluoroethylene, and dried for 2 hours at 60°C to manufacture a solid electrolyte layer of 100 $\mu$m in thickness.

Manufacture of Negative Electrode:

90 wt% of silver (Ag) nano-particles ($D_{50}$: 60 nm) and 10 wt% of carbon black were mixed in a water solvent to prepare a negative electrode coating layer slurry. The carbon black was a mixture of single particles having a particle diameter of 38 nm and secondary particles having a particle diameter of 275 nm in which primary particles having a particle diameter of 76 nm were aggregated. The slurry was coated on a foil-type current collector of stainless steel, and then dried to manufacture a negative electrode including a negative electrode coating layer of 12 $\mu$m in thickness and a current collector of 10 $\mu$m in thickness.

Comparative

A positive electrode was manufactured according to the same method as in Embodiment, with a difference that, in manufacturing a positive electrode, a first positive electrode active material slurry was coated on an aluminum positive electrode current collector and then dried and pressed to prepare a first positive electrode plate utilized as the positive electrode without preparing a composite layer in the form of a self-standing film. A loading level of the manufactured positive electrode was 25 mg/cm$^2$.

Afterwards, an all-solid-state battery was fabricated according to the same method as in Embodiment.

Evaluation; Cycle-Life Characteristics of All-Solid-State Battery

Each of the all-solid-state batteries according to Embodiment and Comparative was charged (0.33 C CC/CV charging 4.25 V 0.05 C cut) and discharged (0.33 C CC discharging 3.0 V cut) as a first cycle, and from a second cycle, the all-solid-state battery was charged (1.0 C CC/CV charging 4.25 V 0.05 C cut) and discharged (0.5 C CC discharging 3.0 V cut) while monitoring cycles until a capacity retention rate reached 80%. A capacity retention rate at an $N^{th}$ cycle was calculated according to Mathematical Equation 1.

Capacity retention rate (%) = [discharge capacity at $N^{th}$ cycle / discharge capacity at $1^{st}$ cycle] $\times$ 100        Mathematical Equation 1:

Table 1:

|  | Evaluation of cycle-life (SOH 80%) |
|---|---|
| Embodiment | 100 cyc |
| Comparative | 25 cyc |

Referring to Table 1, it may be ascertained that the all-solid-state battery according to Embodiment exhibits a desired or improved capacity retention rate compared to the all-solid-state battery according to Comparative.

According to some example embodiments of the present disclosure, a first positive electrode active material layer may be included on a positive electrode current collector, and a second positive electrode active material layer may be included on the first positive electrode active material layer. The first positive electrode active material layer may include a first positive electrode active material having a large average particle diameter, and the second positive electrode active material layer may include a second positive electrode active material having a small particle diameter.

The first positive electrode active material may have high electrical conductivity and increased capacity, and the second positive electrode active material may have high ionic conductivity and increased output. Accordingly, it may be possible to provide a positive electrode layer for an all-solid-state battery with desired or improved electrochemical characteristics.

While this disclosure has been described in connection with what is presently considered to be example embodiments, it is to be understood that the present disclosure is not limited to the disclosed example embodiments and is intended to cover various modifications and equivalent arrangements included within the spirit and scope of the appended claims, and therefore the aforementioned example embodiments should be understood to be exemplary but not limiting this disclosure in any way.

**Claims**

1. A positive electrode layer (100) for an all-solid-state battery, the positive electrode layer (100) comprising:

   a positive electrode current collector (110);
   a first positive electrode active material layer (AL1) on the positive electrode current collector (110); and
   a second positive electrode active material layer (AL2) on the first positive electrode active material layer (AL1),
   wherein the first positive electrode active material layer (AL1) comprises a first positive electrode active material (AM1) and a first solid electrolyte (SE1),
   wherein the second positive electrode active material layer (AL2) comprises a second positive electrode active material (AM2) and a second solid electrolyte (SE2),
   wherein an average particle diameter of the first positive electrode active material (AM1) is greater than an average particle diameter of the second positive electrode active material (AM2), and
   wherein an average particle diameter of the first solid electrolyte (SE1) is lower than an average particle diameter of the second solid electrolyte (SE2).

2. The positive electrode layer (100) of claim 1, wherein the average particle diameter of the first positive electrode active material (AM1) is greater than the average particle diameter of the first solid electrolyte (SE1).

3. The positive electrode layer (100) of claim 1 or 2, wherein the average particle diameter of the first positive electrode active material (AM1) is greater than the average particle diameter of the second solid electrolyte (SE2).

4. The positive electrode layer (100) according to any one of claims 1 to 3, wherein the average particle diameter of the first positive electrode active material (AM1) is in a range of $\geq 1.67$ times to $\leq 10$ times the average particle diameter of the second positive electrode active material (AM2).

5. The positive electrode layer (100) according to any one of claims 1 to 4, wherein the average particle diameter of the first positive electrode active material (AM1) is in a range of $\geq 4$ times to $\leq 13$ times the average particle diameter of the first solid electrolyte (SE1).

6. The positive electrode layer (100) according to any one of claims 1 to 5, wherein the average particle diameter of the first positive electrode active material (AM1) is in a range of $\geq 10$ $\mu$m to $\leq 20$ $\mu$m.

7. The positive electrode layer (100) according to any one of claims 1 to 6, wherein the average particle diameter of the second positive electrode active material (AM2) is in a range of $\geq 2$ $\mu$m to $\leq 6$ $\mu$m.

8. The positive electrode layer (100) according to any one of claims 1 to 7, wherein the average particle diameter of the second solid electrolyte (SE2) is in a range of about 1.1 times to $\leq 1.6$ times the average particle diameter of the first solid electrolyte (SE1).

9. The positive electrode layer (100) according to any one of claims 1 to 8, wherein the average particle diameter of the second solid electrolyte (SE2) is in a range of $\geq 1.5$ $\mu$m to $\leq 2.5$ $\mu$m.

10. The positive electrode layer (100) according to any one of claims 1 to 9, wherein the average particle diameter of the first solid electrolyte (SE1) is in a range of $\geq 0.1$ $\mu$m to $\leq 1.5$ $\mu$m.

11. The positive electrode layer (100) according to any one of claims 1 to 10, wherein the second positive electrode active material layer (AL2) further comprises a porous film impregnated therein.

12. The positive electrode layer (100) according to any one of claims 1 to 11, wherein:

the first positive electrode active material layer (AL1) further comprises a binder for a wet process, and
the second positive electrode active material layer (AL2) further comprises a binder for a dry process.

13. An all-solid-state battery, comprising:

the positive electrode layer (100) as set forth according to any one of claims 1 to 12;
a negative electrode layer (200) opposite to the positive electrode layer (100); and
a solid electrolyte layer (300) between the positive electrode layer (100) and the negative electrode layer (200).

14. The all-solid-state battery of claim 13, wherein the negative electrode layer (200) comprises a negative electrode current collector (210) and a negative electrode coating layer (220), and
wherein the negative electrode coating layer (220) comprises a metal and a carbon-based material.

15. The all-solid-state battery of claim 14, wherein

the metal comprises at least one of Ag, Zn, Al, Sn, Mg, Ge, Cu, In, Ni, Bi, Au, Si, Pt, and Pd, and
the carbon-based material comprises at least one of crystalline carbon and amorphous carbon.

# FIG. 1

# FIG. 2

# FIG. 3

# FIG. 4

# FIG. 5

# FIG. 6

# FIG. 7

PRU

CMM

PA1

110

PRU

# FIG. 8

AL2
AL1
120
100
110

# FIG. 9

| Mix positive electrode active material, conductive material, and binder | S200 |

↓

| Form positive electrode active material layer | S400 |

↓

| Laminate positive electrode active material layer on positive electrode current collector | S600 |

# FIG. 10

# FIG. 11

# FIG. 12

# FIG. 13

<u>1300</u>

| Coating First Positive Electrode Slurry on Positive Electrode Current Collector | ~1310 |

↓

| Providing First Positive Electrode Active Material Layer with Self-Standing Film | ~1320 |

Europäisches
Patentamt

European
Patent Office

Office européen
des brevets

# EUROPEAN SEARCH REPORT

**Application Number**

EP 25 19 5033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 691 046 A (LISHEN QINGDAO NEW ENERGY CO LTD) 12 March 2024 (2024-03-12) * paragraphs [0033] - [0036]; claims 1-10; figure 3 * | 1-15 | INV. H01M4/131 H01M4/134 H01M4/36 H01M10/0562 H01M4/62 |
| A | KR 2024 0093335 A (SAMSUNG SDI CO LTD [KR]) 24 June 2024 (2024-06-24) * paragraphs [0352] - [0361]; claims 1-20; figures 1-5; example 1 * | 1-15 | |
| A | KR 2024 0079953 A (SAMSUNG SDI CO LTD [KR]) 5 June 2024 (2024-06-05) * paragraphs [0030], [0134] - [0146]; claims 1-20; figure 1 * | 1-15 | |
| A | US 2022/085381 A1 (OKABE AMI [JP] ET AL) 17 March 2022 (2022-03-17) * paragraphs [0085], [0145], [0153] - [0156]; claims 1-17; figure 2 * | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 5 December 2025 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 5033

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2025

| Patent document cited in search report | | Publication date | Patent family member(s) | | Publication date |
|---|---|---|---|---|---|
| CN 117691046 | A | 12-03-2024 | NONE | | |
| KR 20240093335 | A | 24-06-2024 | NONE | | |
| KR 20240079953 | A | 05-06-2024 | CN | 120283309 A | 08-07-2025 |
| | | | EP | 4629311 A1 | 08-10-2025 |
| | | | KR | 20240079953 A | 05-06-2024 |
| | | | WO | 2024117675 A1 | 06-06-2024 |
| US 2022085381 | A1 | 17-03-2022 | CN | 114203950 A | 18-03-2022 |
| | | | EP | 3972009 A1 | 23-03-2022 |
| | | | JP | 7507401 B2 | 28-06-2024 |
| | | | JP | 2022049868 A | 30-03-2022 |
| | | | US | 2022085381 A1 | 17-03-2022 |

EPO FORM P0459

For more details about this annex : see Official Journal of the European Patent Office, No. 12/82

## EP 4 697 400 A1

**Patent documents cited in the description**

- KR 1020240108467